# EUROPEAN PATENT APPLICATION

(11) **EP 3 013 022 A1**
(43) Date of publication of application: **27.04.2016**
(21) Application number: 13887084.5
(22) Date of filing: 20.06.2013
(51) Int. Cl.: H04M 1/60, H04M 1/21

(54) **HANDSFREE TELEPHONE CONVERSATION ASSIST APPARATUS AND HANDSFREE TELEPHONE CONVERSATION ASSIST SYSTEM**

(71) Applicant: Transtron Inc., Kohoku-ku Yokohama-shi, Kanagawa 222-0033 (JP)
(72) Inventor: TAMURA, Masashi, Yokohama-shi Kanagawa 222-0033 (JP); WATANABE, Junichi, Yokohama-shi Kanagawa 222-0033 (JP); WAKAMATSU, Yoshimi, Yokohama-shi Kanagawa 222-0033 (JP); KAMODA, Hisao, Yokohama-shi Kanagawa 222-0033 (JP)
(74) Representative: Hutchison, James
(86) International application number: PCT/JP2013/066991
(87) International publication number: WO 2014/203380

(57) **Abstract**

In a call supporting device (10), a speaker unit, a first microphone unit, and a second microphone unit are housed in a casing of the call supporting device (10). Moreover, an opening (34) of the speaker unit, an opening (33-1) of the first microphone unit, and an opening (33-2) of the second microphone unit are arranged on one surface of the casing of the call supporting device (10). Furthermore, the opening (33-1) of the first microphone unit, and the opening (33-2) of the second microphone unit are arranged at uniform distances from the opening (34) of the speaker unit.

## Description

### [Technical Field]

The present invention relates to an handsfree-call supporting device and a handsfree-call supporting system.

### [Background Art]

Conventionally, a system for achieving handsfree call (hereinafter, it may be called "handsfree call system") in a vehicle has been proposed. A conventional handsfree call system includes a speaker, a microphone, and a radio device. The conventional handsfree call system receives a sound signal transmitted from a party at the other end with the radio device, and outputs a sound based on the received sound signal from the speaker. Moreover, the conventional handsfree call system detects a sound with the microphone, and forms a detection sound signal base on the detected sound to transmit to a telephone of a party at the other end through the radio device. Thus, the handsfree call is achieved.

Furthermore, with the spread of mobile phones, a handsfree call system in which a mobile phone of a user on a vehicle is connected thereto to achieve handsfree call by the user has also been proposed.

By outputting a sound of a party at the other end from the speaker, and then by detecting the output sound by the microphone, a detection sound signal (that is, an echo signal) based on the detected sound can be transmitted to the telephone of the party at the other end, thereby causing an echo phenomenon. This echo phenomenon can disturb telephone conversation. Moreover, by the same principle as the principle causing the echo phenomenon, a howling phenomenon can occur.

To prevent this echo phenomenon, an echo prevention circuit can be provided in the conventional handsfree call system.

### [Citation List]

### [Patent Citation]

Patent Document 1: Japanese Laid-open Patent Publication No. 09-205388
Patent Document 2: Japanese Laid-open Patent Publication No. 2001-146136

### [Summary of Invention]

### [Technical Problem]

However, in the conventional handsfree call system, because a relative relation between a speaker arrangement position and a microphone arrangement position differs depending on a type of a vehicle in which the system is established, an acoustic path of an echo signal differs depending on a type of a vehicle. Therefore, to prevent the echo phenomenon, it is requested to adjust the echo circuit per vehicle type, and as a result, the development man-hours and the manufacturing costs for the handsfree call system can increase.

The disclosed technique has been achieved in view of the above problem, and it is an object to provide an handsfree-call supporting device and a handsfree-call supporting system that enable to reduce the development man-hours and the manufacturing costs.

### [Solution to Problem]

In the disclosed embodiment, a handsfree-call supporting device that is used, connected to a mobile phone through any one of a wired interface and a wireless interface, includes: a casing; a speaker unit; a first microphone unit; and a second microphone unit. The speaker unit includes a speaker device and a sound output unit, the speaker device outputting a sound based on a reception sound signal that is received from the mobile phone, the sound output unit including a first opening, a second opening that is different from the first opening, and a conductive hole that connects the first opening and the second opening, and inputting the output sound from the first opening, guiding the output sound through the conductive hole, and outputting the output sound from the second opening. The first microphone unit includes a first sound collector unit in a horn shape having a third opening, and a first microphone device that detects a sound collected by the first sound collector unit, and outputs a first detection-sound signal based on the detected sound. The second microphone unit includes a second sound collector unit in a horn shape having a fourth opening, and a second microphone device that detects a sound collected by the second sound collector unit, and outputs a second detection-sound signal based on the detected sound. The speaker unit, the first microphone unit, and the second microphone unit are housed in the casing, the second opening, the third opening, and the fourth opening are arranged on one surface of the casing, and the third opening and the fourth opening are arranged at uniform distances from the second opening.

### [Advantageous Effects of Invention]

According to a disclosed aspect, development man-hours and manufacturing costs can be reduced.

### [Brief Description of Drawings]

FIG. 1 is a block diagram depicting one example of a handsfree-call supporting system of a first embodiment.
FIG. 2 is a functional block diagram depicting one example of a call supporting device of the first embodiment.
FIG. 3 is a schematic diagram depicting one example of a speaker unit of the first embodiment.
FIG. 4 is a schematic diagram depicting one example of a microphone unit of the first embodiment.
FIG. 5 is an exploded perspective view depicting a specific configuration example of the call supporting device of the first embodiment.
FIG. 6 is a diagram for explaining a positional relation of an opening of the speaker unit, an opening of a first microphone unit, and an opening of a second microphone unit.
FIG. 7 is a functional block diagram depicting one example of a control device of the first embodiment.

### [Embodiments for Carrying Out the Invention]

Embodiments of a handsfree-call supporting device and a handsfree-call supporting system disclosed in the present application are explained in detail below with reference to the drawings. The handsfree-call supporting device and the handsfree-call supporting system disclosed in the present application are not limited to these embodiments. Moreover, in the embodiments, the same reference symbol is given to components having the same function, and duplicated explanation thereof is omitted.

### [First Embodiment]

### [Overview of Handsfree-call Supporting System]

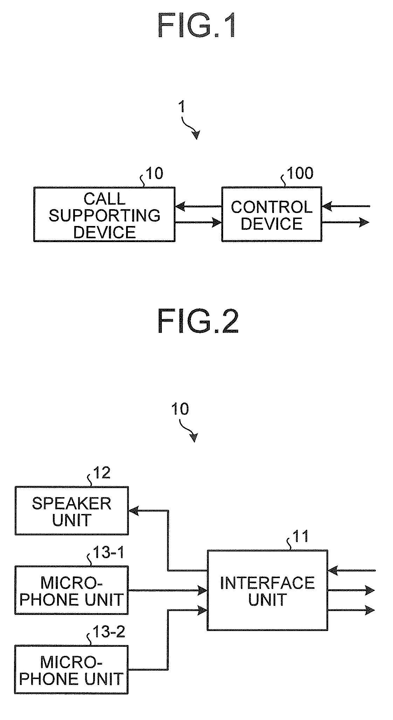

FIG. 1 is a block diagram depicting one example of a handsfree-call supporting system of a first embodiment. As depicted in FIG. 1, a handsfree-call supporting system 1 (hereinafter, it may be called "call supporting system 1") includes a call supporting device 10 that supports a handsfree call, and a control device 100.

The call supporting system 1 is installed, for example, in a vehicle. The call supporting system 1 is connected to a mobile phone of a user in the vehicle through wired or wireless communication.

The call supporting device 10 receives a sound signal transmitted from a telephone of a party at the other end of the user through the mobile phone of the user and the control device 100, and outputs a sound according to the sound signal from a speaker unit that is equipped in the call supporting device 10. Furthermore, the call supporting device 10 forms a detection sound signal based on a sound detected by a microphone unit that is equipped in the call supporting device 10, and transmits the formed detection sound signal to the telephone of the party at the other end through the control device 100 and the mobile phone of the user. Thus, the user can make conversation without holding the mobile phone, that is, handsfree call.

### [Configuration of Call Supporting Device 10]

FIG. 2 is a functional block diagram depicting one example of a call supporting device of the first embodiment. As depicted in FIG. 2, the call supporting device 10 includes an interface unit 11, a speaker unit 12, and microphone units 13-1 and 13-2. The call supporting device 10 is arranged, for example, near a room lamp inside a vehicle. In the following, when the microphone unit 13-1 and the microphone unit 13-2 are not particularly distinguished from each other, the units may be collectively called as microphone unit 13.

The interface unit 11 is an interface to connect the call supporting device 10 and the control device 100. The interface unit 11 is, for example, a connector when the call supporting device 10 and the control device 100 are connected with a wire, and is, for example, a wireless functional unit when a call supporting device 10 and the control device 100 are connected wirelessly.

The interface unit 11 outputs a sound signal received from the control device 100 to the speaker unit 12. Moreover, the interface unit 11 outputs a detection sound signal received from the microphone unit 13 to the control device 100.

The speaker unit 12 outputs a sound based on the sound signal received from the interface unit 11.

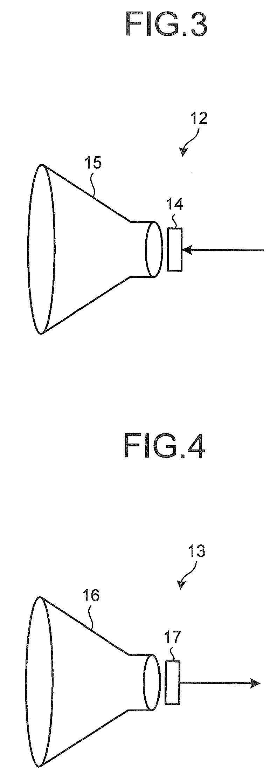

For example, the speaker unit 12 includes a speaker device 14 and a sound output unit 15 as depicted in FIG. 3. FIG. 3 is a schematic diagram depicting one example of the speaker unit of the first embodiment. The speaker device 14 outputs a sound based on the sound signal received from the interface unit 11. The sound output unit 15 includes a conductive hole. The sound output from the speaker device 14 is input through an opening at one end of the conductive hole of the sound output unit 15, and is output from an opening at the other end to outside of the call supporting device 10. That is, the speaker unit 12 has a cavity structure.

Referring back to FIG. 2, the microphone unit 13 detects a sound, forms a detection sound signal based on the detected sound, and outputs the formed detection sound signal to the interface unit 11.

For example, the microphone unit 13 includes a sound collector unit 16 and a microphone device 17 as depicted in FIG. 4. FIG. 4 is a schematic diagram depicting one example of the microphone unit of the first embodiment. The sound collector unit 16 is formed, for example, in a horn shape. That is, the sound collector unit 16 has a conductive hole. A sound input from an opening at one end of the conductive hole of the sound collector unit 16 is guided by the conductive hole to be output to the microphone device 17 through an opening at the other end of the conductive hole. That is, the microphone unit 13 has a cavity structure. The microphone device 17 detects a sound collected by the sound collector unit 16, forms a detection sound signal based on the detected sound, and outputs the formed detection sound signal to the interface unit 11.

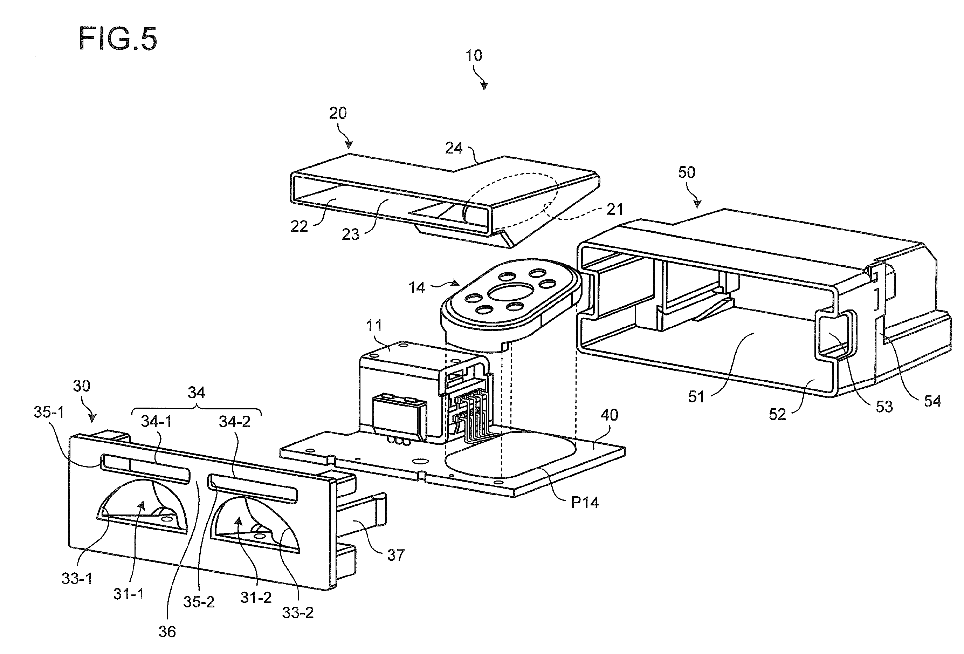

Next, a specific configuration example of the call supporting device 10 is explained. FIG. 5 is an exploded perspective view depicting a specific configuration example of the call supporting device of the first embodiment.

As depicted in FIG. 5, the call supporting device 10 includes a sound output member 20, a front case 30, a substrate 40, and a rear case 50.

On a top surface of the substrate 40, the interface unit 11 is arranged. Furthermore, at an installation planned position P14 that is a region on the top surface of the substrate 40 and in which the interface unit 11 is not arranged, the speaker device 14 is arranged such that a bottom surface of the speaker device 14 is attached thereon. In this state, the speaker device 14 is electrically connected to an output terminal of the interface unit 11.

The sound output member 20 has an opening 21, an opening 22, and a conductive hole 23 that connects the opening 21 and the opening 22. Moreover, the sound output member 20 has the opening 21 and the opening 22 on two different planes. The opening 22 has a shape having symmetric planes, and is a rectangle in FIG. 5. The sound output member 20 is arranged so as to be overlaid on a top surface of the speaker device 14. Specifically, the sound output member 20 is arranged such that a sound emitting portion of the speaker device 14 is exposed to an inside of a conductive hole 23 from the opening 21. Thus, a sound output by the speaker device 14 is input from the opening 21, guided by the conductive hole 23, and is output from the opening 22.

Furthermore, the sound output member 20 has a notch portion 24 at one side. The notch portion 24 forms a space to fit the interface unit 11 when the sound output member 20 is arranged so as to be overlaid on the top surface of the speaker device 14. This enables to avoid collision in a three-dimensional structure, and therefore, the thickness when the substrate 40, the speaker device 14, and the sound output member 20 are overlaid can be reduced.

The rear case 50 has a structure that an interior is hollowed out, and has an internal space 51 and an opening 52. Through the opening 52, the substrate 40, the speaker device 14, and the sound output member 20 are housed in the internal space 51 in an overlaid state. Moreover, the rear case 50 has a guide portion 53 and engaging portion 54 on an external surface.

The front case 30 has, on a rear surface of the front case 30, a hook portion 37 that rises up from the rear surface. This hook portion 37 is put through the guide portion 53 of the rear case 50 to be hooked on the engaging portion 54. Thus, a state in which the front case 30 covers the opening 52 of the rear case 50 can be kept. Furthermore, in this state, a casing of the call supporting device 10 is formed with the front case 30 and the rear case 50. Moreover, in this state, the microphone device 17 is electrically connected to an input terminal of the interface unit 11.

Furthermore, on the front case 30, horn-shaped sound collector units 30-1 and 30-2 are arranged. Sound collector units 31-1 and 31-2 correspond to the above sound collector unit 16. Near each of openings of the sound collector units 31-1 and 31-2 on the rear surface side of the front case 30, the microphone device 17 is arranged.
The microphone unit 13-1 described above corresponds to the sound collector unit 31-1 and one of the microphone devices 17, and the microphone unit 13-2 described above corresponds to the sound collector unit 31-2 and the other one of the microphone devices 17.

Moreover, the front case 30 has an opening 34. Specifically, the front case 30 has conductive holes 35-1 and 35-2 that open through between a front surface and a rear surface of the front case 30. The conductive hole 35-1 and the conductive hole 35-2 are separated from each other by a separation wall 36. That is, the opening 34 includes an opening 34-1 of the conductive hole 35-1 on a front surface side of the front case 30, and an opening 34-2 of the conductive hole 35-2 on the front surface side of the front case 30. A reference point (for example, a central point) of the opening 34 matches with a reference point (for example, a central point) of the opening 22 of the sound output member 20 in a state in which the front case 30 covers the opening 52 of the rear case 50. That is, because the conductive hole 35-1 and the conductive hole 35-2 have an identical shape, or have a mirror symmetric structure, the central point of the opening 34 is present at a position of the separation wall 36. Therefore, the central point of the opening 34 matches with the position of the separation wall 36 in a state in which the front case 30 is covered on the opening 52 of the rear case 50. Accordingly, a sound output from the opening 34 of the sound output member 20 can be equally from the opening 34-1 and the opening 34-2. The sound output unit 15 described above corresponds to the sound output member 20, the conductive hole 35-1, and the conductive hole 35-2.

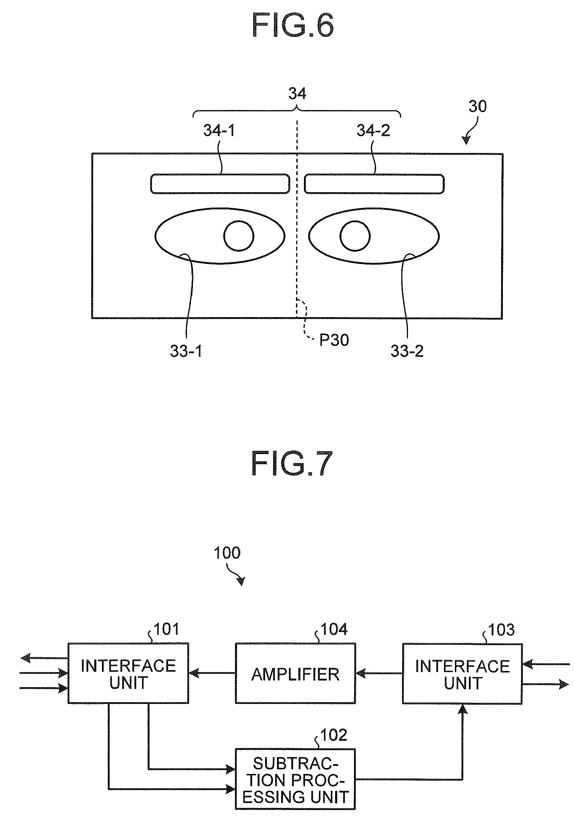

A positional relation of the opening 34, an opening 33-1 of the sound collector unit 31-1, and an opening 33-2 of the sound collector unit 31-2 on the front surface side of the front case 30 is explained. FIG. 6 is a diagram for explaining a positional relation of an opening of the speaker unit, an opening of a first microphone unit, and an opening of a second microphone unit. FIG. 6 schematically depicts the front surface of the front case 30.

As depicted in FIG. 6, the opening 34 has a symmetric shape about a symmetric plane P30. The opening 33-1 and the opening 33-2 are arranged at uniform distances from the central point of the opening 34. In addition, in FIG. 6, the opening 33-1 and the opening 33-2 are arranged at symmetric positions about the symmetric plane P30. Because a sound output from the opening 34 is equal on both sides of the symmetric plane, the sound output from the opening 34 is collected by the sound collector unit 31-1 and the sound collector unit 31-2 at substantially the same level. That is, a sound component corresponding to the sound output from the opening 34 included in a detection sound signal output from the microphone unit 13-1 and a sound component corresponding to the sound output from the opening 34 included in a detection sound signal output from the microphone unit 13-2 are at substantially the same level. Consequently, just by performing subtraction processing on the sound collected by the sound collector unit 31-1 and the sound collected by the sound collector unit 31-2, a collected sound component corresponding to the sound output from the opening 34 can be easily removed.

### [Configuration Example of Control Device 100]

FIG. 7 is a functional block diagram depicting one example of the control device of the first embodiment. As depicted in FIG. 7, the control device 100 includes an interface unit 101, a subtraction processing unit 102, an interface unit 103, and an amplifier 104.

The interface unit 101 is an interface to connect the control device 100 and the call supporting device 10. The interface unit 101 is, for example, a connector when the control device 100 and the call supporting device 10 are connected with a wire, and is, for example, a wireless functional unit when the control device 100 and the call supporting device 10 are connected wirelessly.

The interface unit 101 outputs a first detection-sound signal and a second sound-detection signal received from the call supporting device 10 to the subtraction processing unit 102. The first detection-sound signal and the second sound-detection signal are signals that are output from the microphone unit 13-1 and the microphone unit 13-2, respectively at the same timing. That is, in the first detection-sound signal and the second sound-detection signal, a sound component corresponding to a sound output from the opening 34 is included at substantially the same level. Moreover, the interface unit 101 outputs a reception sound signal that is amplified by the amplifier 104 to the call supporting device 10.

The subtraction processing unit 102 receives the first detection-sound signal and the second sound-detection signal from the interface unit 101, and subtracts the second sound-detection signal from the first detection-sound signal, to output a result of subtraction to the interface unit 103. The subtraction processing unit 102 is, for example, a differential input circuit. As described above, because a sound component corresponding to a sound output from the opening 34 is included substantially the same level in the first detection-sound signal and the sound-detection signal, a sound component corresponding to a sound output from the opening 34 can be easily removed just by performing the subtraction processing. That is, a sound component corresponding to a sound of a party at the other end, included in the above result of subtraction transmitted to the telephone of the party at the other end, can be reduced. Accordingly, the echo phenomenon and the howling phenomenon can be prevented.

The interface unit 103 is an interface to connect the control device 100 and a mobile phone of a user. The interface unit 103 is, for example, a connector when the control device 100 and a mobile phone of a user are connected with a wire, and is, for example, a wireless functional unit when the control device 100 and a mobile phone of a user are connected wirelessly.

The interface unit 103 receives a sound signal transmitted from a phone of a party at the other end through the mobile phone of the user, to output to the amplifier 104. Furthermore, the interface unit 103 sends the result of subtraction received from the subtraction processing unit 102 to the phone of the party at the other end through the mobile phone of the user.

The amplifier 104 amplifies the sound signal received from the interface unit 103, and outputs the amplified sound signal to the interface unit 101.

As described above, according to the present embodiment, in the call supporting device 10, the speaker unit 12, the microphone unit 13-2, and the microphone unit 13-2 are housed in the casing of the call supporting device 10. Moreover, the opening 34 of the speaker unit 12, the opening 33-1 of the microphone unit 13-1, and the opening 33-2 of the microphone unit 13-2 are arranged on one surface of the casing of the call supporting device 10. Furthermore, the opening 33-1 of the microphone unit 13-1, and the opening 33-2 of the microphone unit 13-2 are arranged at uniform distances from the opening 34 of the speaker unit 12.

With this configuration of the call supporting device 10, the positional relation of the speaker unit 12, the microphone unit 13-1, and the microphone unit 13-2 can be fixed, and therefore, the development man-hours and the manufacturing costs can be reduced. Moreover, it is possible to make a sound component corresponding to a sound output from the opening 34 included in a detection sound signal that is output from the microphone unit 13-1 at substantially the same level as a sound component corresponding to a sound output from the opening 34 included in a detection sound signal that is output from the microphone unit 13-2. As a result, just by performing subtraction processing on a sound collected by the sound collector unit 31-1 and a sound collected by the sound collector unit 31-2, a collected sound component corresponding to the sound output from the opening 34 can be easily removed.

### [Other Embodiments]

[1] Although it has been explained that the call supporting device 10 and the control device 100 are separate devices in the first embodiment, it is not limited thereto. For example, the call supporting device 10 and the control device 100 can be integrated to one call supporting device. In this case, the call supporting device is connected to a mobile phone of a user through a wire or through a wireless communication.
[2] Although the amplifier and the subtraction processing unit are arranged in the control device 100 in the first embodiment, it is not limited thereto. For example, it may be configured such that the amplifier is arranged in one device and the subtraction processing unit is arranged in another device.

### [Explanation of Reference]

- 1: Handsfree-call supporting system
- 10: Call supporting device
- 11, 101, 103: Interface unit
- 12: Speaker unit
- 13: Microphone unit
- 14: Speaker device
- 15: Sound output unit
- 16, 31: Sound collector unit
- 17: Microphone device
- 20: Sound output member
- 21, 22, 33, 34, 52: Opening
- 23, 35: Conductive hole
- 24: Notch portion
- 30: Front case
- 36: Separation wall
- 37: Hook portion
- 40: Substrate
- 50: Rear case
- 51: Internal space
- 53: Guide portion
- 54: Engaging portion
- 100: Control device
- 102: Subtraction processing unit
- 104: Amplifier

## Claims

1. A handsfree-call supporting device that is used, connected to a mobile phone through any one of a wired interface and a wireless interface, comprising:
a casing;
a speaker unit configured to include a speaker device and a sound output unit, the speaker device outputting a sound based on a reception sound signal that is received from the mobile phone, the sound output unit including a first opening, a second opening that is different from the first opening, and a conductive hole that connects the first opening and the second opening, and inputting the output sound from the first opening, guiding the output sound through the conductive hole, and outputting the output sound from the second opening;
a first microphone unit configured to include a first sound collector unit in a horn shape having a third opening, and a first microphone device that detects a sound collected by the first sound collector unit, and outputs a first detection-sound signal based on the detected sound; and
a second microphone unit configured to include a second sound collector unit in a horn shape having a fourth opening, and a second microphone device that detects a sound collected by the second sound collector unit, and outputs a second detection-sound signal based on the detected sound, wherein
the speaker unit, the first microphone unit, and the second microphone unit are housed in the casing,
the second opening, the third opening, and the fourth opening are arranged on one surface of the casing, and
the third opening and the fourth opening are arranged at uniform distances from the second opening.

2. The handsfree-call supporting device according to claim 1, wherein
the second opening has a symmetric shape about a symmetric plane, and
the third opening and the fourth opening are arranged at symmetric positions about the symmetric plane.

3. The handsfree-call supporting device according to claim 1 or 2, further comprising a subtraction processing unit configured to subtract the second detection-sound signal from the first detection-sound signal, and outputs an acquired subtraction result signal to the interface.

4. A handsfree-call supporting system that includes a call supporting device and a control device, and that is used, connected to a mobile phone through any one of a wired interface and a wireless interface, wherein
the call supporting device include:
a casing;
a speaker unit configured to include a speaker device and a sound output unit, the speaker device outputting a sound based on a reception sound signal that is received from the mobile phone, the sound output unit including a first opening, a second opening that is different from the first opening, and a conductive hole that connects the first opening and the second opening, and inputting the output sound from the first opening, guiding the output sound through the conductive hole, and outputting the output sound from the second opening;
a first microphone unit configured to include a first sound collector unit in a horn shape having a third opening, and a first microphone device that detects a sound collected by the first sound collector unit, and outputs a first detection-sound signal based on the detected sound; and
a second microphone unit configured to include a second sound collector unit in a horn shape having a fourth opening, and a second microphone device that detects a sound collected by the second sound collector unit, and outputs a second detection-sound signal based on the detected sound, wherein
the speaker unit, the first microphone unit, and the second microphone unit are housed in the casing,
the second opening, the third opening, and the fourth opening are arranged on one surface of the casing, and
the third opening and the fourth opening are arranged at uniform distances from the second opening.

5. The handsfree-call supporting system according to claim 4, wherein
the second opening has a symmetric shape about a symmetric plane, and
the third opening and the fourth opening are arranged at symmetric positions about the symmetric plane.

6. The handsfree-call supporting system according to claim 4 or 5, further comprising a subtraction processing unit configured to subtract the second detection-sound signal from the first detection-sound signal, and outputs an acquired subtraction result signal to the interface.
